# EUROPÄISCHE PATENTANMELDUNG

(11) **EP 4 502 095 A1**
(43) Veröffentlichungstag der Anmeldung: **05.02.2025**
(21) Anmeldenummer: 24186156.6
(22) Anmeldetag: 03.07.2024
(51) Int. Cl.: C09J 5/00, C09J 7/10, C09J 7/22, C09J 7/28, C09J 7/38, C09J 153/02

(54) **HAFTKLEBEMASSE, KLEBEBAND, VERKLEBTER VERBUND UND VERFAHREN ZUM ELEKTRISCHEN LÖSEN DES VERKLEBTEN VERBUNDES**

(30) Priorität: 31.07.2023 DE 102023120290
(71) Anmelder: TESA SE, 22848 Norderstedt (DE)
(72) Erfinder: WANG, Shuang, Norderstedt (DE); KEITE-TELGENBÜSCHER, Klaus, Norderstedt (DE); DOLLASE, Thilo, Norderstedt (DE); GARGIULO, Jessika, Norderstedt (DE); KRAWINKEL, Thorsten, Norderstedt (DE); BLANK, Carsten, Norderstedt (DE)
(74) Vertreter: tesa SE

(57) **Zusammenfassung**

Die Erfindung betrifft eine Haftklebemasse, ein Klebeband, einen verklebten Verbund, ein Verfahren zum elektrischen Lösen des verklebten Verbundes und die Verwendung der Klebemasse zur Verklebung von Bauteilen in elektronischen Geräten, Automobilen, medizinischen Geräten und zahnmedizinischen Geräten.

Die Haftklebemasse enthält wenigstens ein Elektrolyt und eine Basismasse, wobei die Basismasse wenigstens ein Polydien-Blockcopolymer und wenigstens ein Klebharz enthält.

## Beschreibung

Die Erfindung betrifft eine Haftklebemasse, ein Klebeband, einen verklebten Verbund, ein Verfahren zum elektrischen Lösen des verklebten Verbundes und die Verwendung der Klebemasse zur Verklebung von Bauteilen in elektronischen Geräten, Automobilen, medizinischen Geräten und zahnmedizinischen Geräten.

Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3031875 B1 die Herabsetzung der Klebkraft einer Acrylat-Klebemasse durch das Anlegen einer Spannung.

Insbesondere auf niederenergetischen Oberflächen weisen Acrylat-Klebemassen aber oft keine ausreichende Klebrigkeit auf.

Der vorliegenden Erfindung liegt daher die Aufgabe zugrunde, eine Haftklebemasse bereitzustellen, wobei die Haftklebemasse auch auf Substraten mit niederenergetischen Oberflächen gut anhaften soll und sich aber zudem mit geringem Kraftaufwand von wenigstens einem Substrat wieder ablösen lassen soll. Gleichzeitig soll das Wiederablösen möglichst einfach und sauber erfolgen können. Eine ergänzende Aufgabe ist es, ein entsprechendes vorteilhaftes Klebeband bereitzustellen.

Es ist eine zusätzliche Aufgabe, einen verklebten Verbund und ein Verfahren zum Wiederablösen der durch die Klebemasse bzw. das Klebeband hergestellten Klebeverbindung anzugeben.

Zudem ist es eine Aufgabe der Erfindung, eine Verwendung der bereitzustellenden Klebemassen bzw. Klebebänder zur Verklebung von zwei oder mehr Substraten bereitzustellen.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den weiteren, abhängigen Ansprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Damit sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst. Merkmale bevorzugter Klebebänder, verklebten Verbunde sowie Verwendungen und Verfahren ergeben sich aus den Merkmalen bevorzugter Haftklebemassen. Merkmale bevorzugter verklebter Verbunde, Verwendungen und Verfahren ergeben sich zudem aus den Merkmalen bevorzugter Klebebänder.

Die erfindungsgemäße Haftklebemasse enthält wenigstens ein Elektrolyt und eine Basismasse, wobei die Basismasse wenigstens ein Polydien-Blockcopolymer und wenigstens ein Klebharz enthält.

Mittels des enthaltenen Elektrolyten ist die Klebemasse auch nach dem Verkleben durch Anlegen einer Spannung elektrisch ablösbar.

Überraschenderweise hat sich herausgestellt, dass sich eine Haftklebemasse enthaltend wenigstens ein Polydien-Blockcopolymer und wenigstens ein Elektrolyt ohne großen Kraftaufwand von verklebten Substraten elektrisch durch Anlegen einer Spannung auf einfache und schnelle Weise wieder ablösen lässt, und gleichzeitig die Klebkraft der Haftklebemasse auch an solche zu verklebenden Substrate mit niederenergetischen Oberflächen vor dem Lösen nicht negativ beeinträchtigt ist.

Klebemassen und Verfahren zum elektrischen Wiederablösen bzw. zur elektrischen Reduzierung der Klebkraft sind im Stand der Technik prinzipiell bekannt. So offenbart wie oben ausgeführt die EP 3031875 B1 ein solches elektrisches Verfahren. Die elektrisch ablösbare Klebemasse ist dabei eine solche auf Acrylat-Basis.

Es war vorliegend allerdings nicht abzusehen, dass sich auch eine Haftklebemasse enthaltend wenigstens ein Polydien-Blockcopolymer nach dem Verkleben elektrisch ablösen lässt, und zwar ohne, dass die Klebkraft an die zu verklebenden Substrate vor dem Lösen negativ beeinträchtigt ist. Insbesondere war nicht davon auszugehen, dass Polydien-basierte Haftklebemassen, die durch den hohen Anteil an Kohlenwasserstoffverbindungen einen unpolaren Charakter ausweisen, mit Elektrolyten überhaupt in einer Form mischbar sind, dass einerseits attraktive Haftklebeigenschaften erhalten werden und andererseits das Ablösen durch Anlegen einer Spannung möglich ist.

Gleichzeitig ist das Ablösen sauber und einfach.

Im Folgenden wird die erfindungsgemäße Haftklebemasse näher ausgeführt.

Die Haftklebemasse enthält eine Basismasse und wenigstens ein Elektrolyt, dessen Menge in Bezug zu der Menge der Basismasse steht.

Unter einem "Elektrolyt" wird vorliegend eine chemische Verbindung verstanden, "die im festen, flüssigen oder gelösten Zustand in Ionen dissoziiert ist und die sich unter dem Einfluss eines elektrischen Feldes gerichtet bewegt", wie unter dem Wikipedia-Eintrag "Elektrolyt" vom 04.01.2023 aufgeführt.

Bevorzugt ist der Elektrolyt ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen, ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Ohne sich hierauf einschränken zu wollen, kann mechanistisch davon ausgegangen werden, dass es hierdurch zu einer Absenkung der Klebkraft der die ionische Flüssigkeit enthaltenden Klebemasse an wenigstens ein Substrat kommt, wodurch eine adhäsive Spaltung zwischen der Klebemasse und dem wenigstens einen Substrat erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasse zwei oder mehrere verschiedene ionische Flüssigkeiten zugegeben werden bzw. die Klebemasse dann zwei oder mehrere verschiedene ionische Flüssigkeiten enthält.

Bevorzugt ist das Anion der ionischen Flüssigkeit ausgewählt aus der Gruppe bestehend aus Br-, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, ASF₆⁻, SbF₆⁻, CF₃(CF₂)₃SO₃⁻ (CF₃CF₂SO₂)₂N⁻, CF₃CF₂CF₂COO⁻, (FSO₂)₂N⁻.

Besonders bevorzugt ist das Anion Tetrafluorborat (BF₄⁻).

Hiermit wird eine besonders hohe Reduzierung der Klebkraft durch Anlegen einer Spannung und damit eine besonders gute elektrische Ablösbarkeit der erfindungsgemäßen Haftklebemasse bzw. des erfindungsgemäßen Klebebandes erzielt. Insbesondere gelingt das (Wieder-)Ablösen mit diesem Anion besonders schnell und es verbleiben keine Rückstände.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis.

Besonders bevorzugt ist das Kation ausgewählt aus der Gruppe bestehend aus Kationen auf Imidazolium-Basis.

Hiermit wird eine besonders hohe Reduzierung der Klebkraft durch Anlegen einer Spannung und damit eine besonders gute elektrische Ablösbarkeit der erfindungsgemäßen Haftklebemasse bzw. des erfindungsgemäßen Klebebandes erzielt. Insbesondere gelingt das (Wieder-)Ablösen mit diesem Anion besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium.

Wiederum bevorzugt ist das Kation 1-Ethyl-3-methylimidazolium.

Besonders bevorzugt ist der Elektrolyt 1-Ethyl-3-methylimidazolium-tetrafluorborat.

Hiermit wird eine besonders hohe Reduzierung der Klebkraft durch Anlegen einer Spannung und damit eine besonders gute elektrische Ablösbarkeit der erfindungsgemäßen Haftklebemasse bzw. des erfindungsgemäßen Klebebandes erzielt. Insbesondere gelingt das (Wieder-)Ablösen mit diesem Anion besonders schnell und es verbleiben keine Rückstände.

Hierbei hat es sich als besonders vorteilhaft herausgestellt, wenn die erfindungsgemäße Haftklebemasse wenigstens ein Styrol-Butadien-Styrol-Blockcopolymer (SBS) und bevorzugt wenigstens ein Klebharz, welches ausgewählt ist aus polaren Harzen, wie insbesondere Kolophoniumharzen und Terpenphenol-Harzen, in Kombination mit 1-Ethyl-3-methylimidazolium-tetrafluorborat als Elektrolyt enthält.

Bevorzugt ist es, dass die Haftklebemasse 2 bis 10 Gew.-%, besonders bevorzugt 4 bis 9 Gew.-%, an Elektrolyten, bevorzugt ionischen Flüssigkeiten, bezogen auf 100 Gew.-% der Basismasse enthält.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasse an insbesondere wenigstens ein Substrat vor dem Ablösen nicht negativ beeinträchtigt ist.

Die erfindungsgemäße Haftklebemasse enthält eine Basismasse, wobei die Basismasse wenigstens ein Polydien-Blockcopolymer und wenigstens ein Klebharz enthält.

Bevorzugt enthält die erfindungsgemäße Haftklebemasse 80 bis 95 Gew.-%, besonders bevorzugt 85 bis 95 Gew.-%, ganz besonders bevorzugt 85 bis 92 Gew.-%, der Basismasse, jeweils bezogen auf die Gesamtmasse der Haftklebemasse.

Bevorzugt beträgt die Gesamtmenge an Polydien-Blockcopolymeren in der Basismasse 35 bis 65 Gew.-%, besonders bevorzugt 38 bis 60 Gew.-%, ganz besonders bevorzugt 40 bis 55 Gew.-%, bezogen auf das Gesamtgewicht der Basismasse.

Somit ist eine erfindungsgemäße Haftklebemasse bevorzugt, wobei die Basismasse 35 bis 65 Gew.-%, besonders bevorzugt 38 bis 60 Gew.-%, ganz besonders bevorzugt 40 bis 55 Gew.-%, bezogen auf das Gesamtgewicht der Basismasse, wenigstens eines Polydien-Blockcopolymers enthält.

Bevorzugt ist das wenigstens eine Polydien-Blockcopolymer ein Polyvinylaromat-Polydien-Blockcopolymer.

Gemäß bevorzugter Ausführungsform hat das wenigstens eine Polyvinylaromat-Polydien-Blockcopolymer einen Aufbau der Form A-B-A, (A-B)ₙ, (A-B)ₙX oder (A-B-A)ₙX, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation eines oder mehrerer konjugierter Diene mit 4 bis 18 Kohlenstoffatomen (C-Atomen);
- X für den Rest eines Kopplungsreagenzes oder multifunktionellen Initiators und
- n für eine ganze Zahl ≥ 2 stehen.

Kopplungsreagenzien und multifunktionelle Initiatoren sind dem Fachmann bekannt, wie beispielsweise in N. Hadjichristidis, M. Pitsikalis, S. Pispas, H. latrou, Chem. Rev., 2001, 101, 3747-3792; R. P. Quirk in Thermoplastic Elastomers, G. Holden, G. H. Kricheldorf, R. P. Quirk (Hrsg.), 3. Aufl., 2004, C. Hanser, München, S. 71-75, beschrieben.

Die Polyvinylaromat-Polydien-Blockcopolymere umfassen bevorzugt jeweils einen oder mehrere gummiartige Blöcke B (Elastomerblöcke, Weichblöcke) und mindestens zwei glasartige Blöcke A (Hartblöcke).

Besonders bevorzugt ist in den hier beschriebenen Ausführungsformen mindestens ein Polyvinylaromat-Polydien-Blockcopolymer mit einem Aufbau A-B-A, (A-B)₂X, (A-B)₃X oder (AB)₄X, wobei für A, B und X die vorstehenden Bedeutungen gelten.

Bevorzugt enthält die Basismasse zumindest ein Triblockcopolymer oder höheres Multiblockcopolymer, das linear oder mehrarmig, wie radial oder sternförmig vorliegen kann.

Bevorzugt sind, jeweils bezogen auf die Gesamtheit aller Polyvinylaromat-Polydien-Blockcopolymere in der Basismasse, Polyvinylaromat-Polydien-Blockcopolymere mit einer Peakmolmasse von mindestens 90.000 g/mol, stärker bevorzugt von mindestens 120.000 g/mol. Vorzugsweise beträgt die Peakmolmasse der eingesetzten Polyvinylaromat-Polydien-Blockcopolymere höchstens 300.000 g/mol, besonders bevorzugt höchstens 250.000 g/mol. Die Peakmolmasse kann mittels GPC (Test Ia) gemäß der im Abschnitt "Testmethoden" beschriebenen Methode bestimmt werden.

In den genannten Bereichen der Peakmolmasse weist die Klebemasse eine sehr gute Verarbeitbarkeit bei gleichzeitig sehr guter Wärmescherfestigkeit auf, wobei die Klebemasse hinsichtlich des Zielkonfliktes aus Verarbeitbarkeit und Wärmescherfestigkeit in den Peakmolmassen- Bereichen, die sich aus der Wahl der Untergrenzen und Obergrenzen höherer Bevorzugungsstufen ergeben, entsprechend weiter optimiert ist.

Die Basismasse kann zudem ein oder mehrere Diblockcopolymere A-B enthalten. Ein zu hoher Anteil an Diblockcopolymeren wirkt sich jedoch in der Regel negativ auf die Wärmescherfestigkeit aus. Ihr Anteil in der Haftklebmasse sollte daher nicht zu hoch sein. Besonders bevorzugt beträgt der mittlere Diblock-Anteil der Polyvinylaromat-Polydien-Blockcopolymere, bezogen auf die Gesamtheit aller Polyvinylaromat-Polydien-Blockcopolymere der Basismasse, maximal 50 Gew.-%, insbesondere maximal 35 Gew.-% und dabei bevorzugt mindestens 10 Gew.-%.

Mit den genannten Diblock-Anteilen weist die Klebemasse eine sehr gute Auffließfähigkeit und Klebkraft bei gleichzeitig sehr guter Wärmescherfestigkeit auf, wobei die Klebemasse hinsichtlich des Zielkonfliktes aus Auffließfähigkeit und Klebkraft auf der einen Seite und der Wärmescherfestigkeit auf der anderen Seite mit den Diblock-Anteil-Bereichen, die sich aus der Wahl der Untergrenzen und Obergrenzen höherer Bevorzugungsstufen ergeben, entsprechend weiter optimiert ist.

Insbesondere umfasst die Basismasse der Klebemasse ein Gemisch aus Polyvinylaromat-Polydien-Blockcopolymeren mit einem Aufbau A-B, A-B-A, (A-B)₃X oder (A-B)₄X, das besonders bevorzugt ein radiales Blockcopolymer und/oder Triblockcopolymere A-B-A umfasst. Ebenfalls bevorzugt ist ein Gemisch aus Triblockcopolymeren und (A-B)ₙ- oder (AB)ₙX-Blockcopolymeren mit n größer/gleich 3. Die aus den A- und B-Blöcken resultierenden Blockcopolymere können grundsätzlich gleiche oder unterschiedliche B-Blöcke enthalten. Die Blockcopolymere können lineare A-B-A-Strukturen aufweisen, von radialer Gestalt sein und sternförmige und lineare Multiblockcopolymere umfassen.

Vinylaromaten zum Aufbau des Blocks A umfassen bevorzugt Styrol und Styrol-Derivate, besonders bevorzugt Styrol und α-Methylstyrol. Der Block A kann als Homo- oder Copolymer vorliegen. Besonders bevorzugt ist der Block A ein Polystyrolblock.

Besonders bevorzugt ist das wenigstens eine Polydien-Blockcopolymer somit ein Polystyrol-Polydien-Blockcopolymer.

Anstelle der bevorzugten Polystyrolblöcke können als Vinylaromaten aber auch Polymerblöcke auf Basis anderer aromatenhaltiger Homo- und Copolymere, bevorzugt von C8- bis C12-Aromaten, insbesondere mit Glasübergangstemperaturen von größer 75 °C genutzt werden, zum Beispiel α-Methylstyrol-haltige Aromatenblöcke. Die Glasübergangstemperatur kann beispielsweise mittels DSC (Test II) bestimmt werden.

Die erfindungsgemäß eingesetzten Polyvinylaromat-Polydien-Blockcopolymere können gleiche oder unterschiedliche A-Blöcke enthalten. Bevorzugt haben die Polyvinylaromat-Polydien-Blockcopolymere Polystyrolendblöcke.

Die Monomere für den Weichblock B sind bevorzugt konjugierte Diene, insbesondere solche ausgewählt aus der Gruppe bestehend aus Butadien, Isopren, Ethylbutadien, Phenylbutadien, Piperylen, Pentadien, Hexadien, Ethylhexadien, Farnesen und Dimethylbutadien sowie beliebigen Mischungen dieser Monomere. Auch der Block B kann als Homopolymer oder als Copolymer vorliegen. Besonders bevorzugt sind die Monomere für den Weichblock B ausgewählt aus Butadien und Isopren.

Beispielsweise ist der Weichblock Bein Polyisoprenblock oder ein Polybutadienblock oder ein Polymerblock aus einem Gemisch aus Butadien und Isopren. Ganz besonders bevorzugt ist der Block B ein Polyisopren oder ein Polybutadien, wiederum bevorzugt Polybutadien.

Insbesondere mit Polybutadien als Block B ergibt sind eine hohe Wärmescherfestigkeit und Langzeitstabilität der Klebemasse.

Die A-Blöcke der Polyvinyaromat-Polydien-Blockcoplymer haben bevorzugt eine Glasübergangstemperatur von mindestens 25 °C, insbesondere mindestens 50 °C.

Für die B-Blöcke ist eine Glasübergangstemperatur von maximal 0 °C, insbesondere maximal -25 °C bevorzugt. Diese Angaben beziehen sich auf die reinen, unabgemischten Blockcopolymere und werden erfindungsgemäß mittels DSC ermittelt (Test II).

Der Anteil an A-Block in den Polyvinylaromat-Polydien-Blockcopolymeren liegt bevorzugt bei mindestens 12 Gew.-% und maximal bei 40 Gew.-%, stärker bevorzugt bei mindestens 15 Gew.-% und bevorzugt bei maximal 35 Gew.-%.

Insbesondere und bevorzugt ist das Polydien-Blockcopolymer ein Polystyrol-Polydien-Blockcopolymer mit einem Polystyrol-Gehalt von 14 bis 40 Gew.-%, bevorzugt 18 bis 35 Gew.-%, besonders bevorzugt 20 bis 35 Gew.-%.

Bevorzugt beträgt der Anteil der Gesamtheit aller Polyvinylaromat-Polydien-Blockcopolymere, bezogen auf die gesamte Basismasse, mindestens 35 Gew.-% und maximal 65 Gew.-%, stärker bevorzugt mindestens 40 Gew.-% und maximal 60 Gew.-%. Es wurde festgestellt, dass ein zu geringer Anteil an Polyvinylaromat-Polydien-Blockcopolymeren zur Folge hat, dass die Wärmescherfestigkeit der Haftklebmasse sinkt, während ein zu hoher Anteil an Polyvinylaromat-Polydien-Blockcopolymeren wiederum zur Folge hat, dass die Haftklebmasse zu viel an Klebvermögen verliert, so dass die Haftklebemasse bzw. das entsprechende erfindungsgemäße Klebeband für einzelne Anwendungen nicht mehr geeignet sein können.

Die obigen Angaben zur Molmasse der Blockcopolymere beziehen sich jeweils auf diejenige Polymermode, die der in dem entsprechenden Zusammenhang genannten Blockcopolymerarchitektur von einem Fachmann zugeordnet werden kann. Angaben zur Molmasse sind in diesem Zusammenhang als Peakmolmasse zu verstehen. GPC erlaubt üblicherweise die Feststellung der Molmasse der einzelnen Polymermoden in einer Mischung aus verschiedenen Blockcopolymeren.

Gemäß besonders bevorzugter Ausführungsformen handelt es sich bei dem wenigstens einen Polyvinylaromat-Polydien-Blockcopolymer um ein oder um ein Styrol-Isopren-Styrol-Blockcopolymer (SIS), insbesondere um ein SBS-Blockcopolymer.

Insbesondere mit einem SBS-Blockcopolymer ergibt sind eine hohe Wärmescherfestigkeit und Langzeitstabilität der Klebemasse.

Die Basismasse enthält ferner wenigstens ein Klebharz.

Das Klebharz wird insbesondere eingesetzt, um die Adhäsion und/oder Verklebungsfestigkeit in gewünschter Weise einzustellen. Unter einem "Klebharz" wird entsprechend dem allgemeinen Verständnis des Fachmanns ein oligomeres oder polymeres Harz verstanden, das die Adhäsion, also die Eigenklebrigkeit der Haftklebemasse im Vergleich zu einer keinen Klebharz enthaltenden, ansonsten aber identischen Haftklebemasse erhöht. Klebharze sind spezielle Verbindungen mit im Vergleich zu Elastomeren, wie den enthaltenen Polydien-Blockcopolymeren, niedriger Molmasse, üblicherweise mit einem gewichtsmittleren Molekulargewicht M_{w} von kleiner 5.000 g/mol. Typischerweise beträgt das gewichtsmittlere Molekulargewicht einer im Rahmen der vorliegenden Erfindung verwendeten Klebharzkomponente von 400 bis 5.000 g/mol, bevorzugt von 500 bis 2.000 g/mol, bestimmt durch GPC (Test Ib).

Das wenigstens eine Klebharz ist bevorzugt mit den Weichblöcken der Polydien-Blockcopolymere, also mit den Polydien-Blöcken, verträglich und bevorzugt im Wesentlichen nicht mit den Hartblöcken der Polydien-Blockcopolymere verträglich.

Unter dem Ausdruck "im Wesentlichen unverträglich" oder "im Wesentlichen nicht verträglich" wird im Rahmen der vorliegenden Erfindung insbesondere verstanden, dass die angesprochenen Bestandteile bzw. Komponenten zu höchstens 10 Gew.-%, bevorzugt zu höchstens 5 Gew.-%, miteinander mischbar sind.

Unter dem Ausdruck "im Wesentlichen verträglich" wird im Rahmen der vorliegenden Erfindung insbesondere verstanden, dass die angesprochenen Bestandteile bzw. Komponenten zu mindestens 90 Gew.-%, bevorzugt zu mindestens 95 Gew.-%, miteinander mischbar sind.

Das wenigstens eine Klebharz weist bevorzugt eine Erweichungstemperatur (Ring & Ball, Test III) von mindestens 70 °C, vorzugsweise mindestens 90 °C und höchstens +140 °C auf.

Vorzugsweise ist das Klebharz ausgewählt aus der Gruppe bestehend aus unpolaren Kohlenwasserstoffharzen, vorzugsweise hydrierten und nicht hydrierten Polymerisaten des Dicyclopentadiens (DCPD); nicht hydrierten, partiell, selektiv oder vollständig hydrierten Kohlenwasserstoffharzen auf Basis von C5- oder C5/C9-Monomerströmen oder partiell, selektiv oder vollständig hydrierten Kohlenwasserstoffharzen auf Basis von C9-Monomerströmen; Polyterpenharzen auf Basis von α-Pinen und/oder β-Pinen und/oder δ-Limonen, die auch hydriert sein können; polaren Sauerstoff-haltigen Klebharzen wie Terpenphenol-Harze und Kolophonium-haltige Harze, insbesondere Kolophoniumester.

Bevorzugt ist unter anderem wenigstens ein Polyterpenharzen auf Basis von α-Pinen. Insbesondere wenn es sich bei dem oder den Polyvinylaromat-Polydien-Blockcopolymeren um Polybutadien-Blockcopolymer handelt, ist es bevorzugt, dass die erfindungsgemäße Haftklebemasse wenigstens ein Polyterpenharzen auf Basis von α-Pinen enthält.

Kolophoniumharze und Kolophoniumester-Harze können hydriert oder nicht hydriert oder disproportioniert oder anderweitig stabilisiert sein. Ihre Säurezahl liegt bevorzugt bei höchstens 100 mg KOH/g (nach ASTM D465-15/2020).

Terpenphenol-Harze können hydriert oder nicht sein. Ihre OH-Zahl liegt bevorzugt bei höchstens 100 mg KOH/g.

Gemäß bevorzugter Ausführungsformen ist wenigstens ein Klebharz enthalten, welches ausgewählt ist aus der Gruppe bestehend aus Kolophoniumharzen und Terpenphenol-Harzen. Die Basismasse enthält damit ein vergleichsweise polares Harz. Hiermit ergibt sich eine besonders gute elektrische Wiederablösbarkeit der erfindungsgemäßen Haftklebmasse bzw. des erfindungsgemäßen Klebebandes.

Bevorzugt ist beispielsweise und insbesondere ein hydriertes Harz auf Basis eines mit Kolophonium veresterten Pentaerithryts.

Bevorzugt enthält die Basismasse mindestens 25 Gew.-%, besonders bevorzugt 25 bis 65 Gew.-%, ganz besonders bevorzugt 30 bis 55 Gew.-%, wiederum bevorzugt 35 bis 55 Gew.-%, bezogen auf das Gesamtgewicht der Basismasse, wenigstens eines Klebharzes. Bevorzugt beträgt somit die Gesamtmenge an Klebharzen in der Basismasse mindestens 25 Gew.-%, besonders bevorzugt 25 bis 65 Gew.-%, ganz besonders bevorzugt 30 bis 55 Gew.-%, wiederum bevorzugt 35 bis 55 Gew.-%, bezogen auf das Gesamtgewicht der Basismasse.

In den genannten Bereichen der Gesamtmenge an Klebharzen weist die Klebemasse eine attraktive Wärmescherfestigkeit bei gleichzeitig attraktiver Verklebungsfestigkeit sowie trotzdem eine elektrische Wiederablösbarkeit auf, wobei die Klebemasse hinsichtlich des Zielkonfliktes aus Verklebungsfestigkeit und Wärmescherfestigkeit sowie Wiederablösbarkeit in den Mengen- Bereichen, die sich aus der Wahl der Untergrenzen und Obergrenzen höherer Bevorzugungsstufen ergeben, entsprechend weiter optimiert ist.

Bevorzugt ist der Mengenanteil an polaren Harzen, wie insbesondere Kolophoniumharzen und Terpenphenol-Harzen, hoch.

Bevorzugt beträgt der Mengenanteil an polaren Harzen, wie insbesondere Kolophoniumharzen und Terpenphenol-Harzen, bezogen auf die Gesamtmenge an in der Basismasse enthaltenen Klebharzen 50 bis 100 Gew.-%, besonders bevorzugt 55 bis 100 Gew.-%.

Hiermit ergibt sich eine besonders gute elektrische Wiederablösbarkeit der erfindungsgemäßen Haftklebmasse bzw. des erfindungsgemäßen Klebebandes.

Die Basismasse der erfindungsgemäßen Haftklebmasse kann neben den genannten Bestandteilen weitere Bestandteile enthalten.

Besonders enthält die Basismasse weiterhin wenigstens einen Weichmacher.

Der Weichmacher dient vor allem zur finalen Feineinstellung der Kohäsions-/Adhäsions-Balance. Vorzugsweise handelt sich bei dem Weichmacher um ein oder mehrere Weichharze und/oder ein oder mehrere Mineralöle mit einer Erweichungstemperatur, bestimmt gemäß Test III, von unter 30 °C. Bevorzugt ist ein Weichharz oder Weichharzgemisch und sehr bevorzugt ein Weichharz oder Weichharzgemisch mit einer Schmelzviskosität (Test IV) bei 25 °C und 1 Hz von zumindest 20 Pa*s, bevorzugt von zumindest 50 Pa*s. Bei dem Weichharz handelt es sich sehr bevorzugt um ein Kohlenwasserstoff- oder Polyterpen-basierendes Weichharz. Denkbar sind auch Mineral- oder Pflanzenöle mit einem gewichtsmittleren Molekulargewicht von mindestens 500 g/mol, bevorzugt von mindestens 800 g/mol. Ebenso denkbar sind auch Weichmacher auf Basis von Poly(iso)butylen.

Die Gesamtmenge an Weichmachern in der Basismasse beträgt bevorzugt 0 bis 15 Gew.-%, besonders bevorzugt von 0 bis 10 Gew.-%. Für den Fall, dass wenigstens ein Weichmacher enthalten ist, beträgt die Gesamtmenge an Weichmachern bevorzugt 1 bis 15 Gew.-%, besonders bevorzugt von 1 bis 10 Gew.-%, ganz besonders bevorzugt von 1 bis 5 Gew.-%, bezogen auf Gesamtgewicht der Basismasse.

Zur Einstellung weiterer Eigenschaften kann die Basismasse weitere Additive enthalten. Vorzugsweise beträgt deren Anteil jedoch nicht mehr als 18 Gew.-% der Basismasse, vorzugsweise nicht mehr als 10 Gew.-%.

Bei diesen Additiven handelt es sich vor allem um Schutzmittel. Hier seien Alterungsschutzmittel primärer und sekundärer Art, Licht- und UV-Schutzmittel sowie Flammschutzmittel genannt, aber auch Füllstoffe, Farbstoffe und Pigmente. Die Klebemasseschicht kann so beliebig gefärbt oder weiß, grau oder schwarz sein. Als solche oder andere weitere Additive können typischerweise genutzt werden:
- primäre Antioxidantien wie zum Beispiel sterisch gehinderte Phenole, vorzugsweise mit einem Anteil von 0,2 bis 1 Gew.-% bezogen auf das Gesamtgewicht der Basismasse,
- sekundäre Antioxidantien, wie zum Beispiel Phosphite oder Thioether, vorzugsweise mit einem Anteil von 0,2 bis 1 Gew.-% bezogen auf das Gesamtgewicht der Basismasse,
- Prozessstabilisatoren wie zum Beispiel C-Radikalfänger, vorzugsweise mit einem Anteil von 0,2 bis 1 Gew.-% bezogen auf das Gesamtgewicht der Basismasse,
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Basismasse,
- Verarbeitungshilfsmittel, vorzugsweise mit einem Anteil von 0,2 bis 1 Gew.-% bezogen auf das Gesamtgewicht der Basismasse
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Basismasse.

Sofern die Haftklebemasse mit einer Schicht in Kontakt kommt, aus der potenziell sogenannte Kautschukgifte wie Kupfer-, Mangan-II, Eisen-II, Cobalt- oder Nickel-lonen freigesetzt werden können, wird ihr vorteilhafterweise zumindest eine Sorte eine Metalldeaktivators, auch "Metal Scavenger" genannt, zugesetzt. Konkrete Beispiele hierfür sind ADK-Stab CDA-1, CDA-1H, CDA-6 und CDA-10 sowie ADK-Stab ZS-27 oder ZS-90 der Firma Adeka, Hostanox OSP1 der Firma Clariant, Naugard XL-1 der Firma SIGroup und Irganox MD-1024 der Firma BASF. Typische Einsatzmengen liegen bei bis zu 0,5 Gew.-% bezogen auf die Basismasse.

Die erfindungsgemäße Haftklebemasse enthält neben der Basismasse und dem Elektrolyten gemäß bevorzugter Ausführungsformen wenigstens einen Kompatibilisator, der beispielsweise ausgewählt ist aus der Gruppe bestehend aus Polyethern, Polyaminen, Polyvinylpyrrolidonen oder aliphatischen Polyestern, wobei der Kompatibilisator bevorzugt ein Gewichtsmittel der Molekulargewichtsverteilung Mw von 100 bis 5000 g/mol, besonders bevorzugt von 200 bis 2000 g/mol, aufweist. Desweiteren sind amphotere Stoffe wie Alkali- oder Erdalkalifettseifen, anionische, kationische oder nicht ionische Tenside vorteilhaft einsetzbar.

Gemäß besonders bevorzugter Ausführungsformen enthält die erfindungsgemäße Haftklebemasse wenigstens einen Polyether als Kompatibilisator, bevorzugt wenigstens eine Substanz, die ausgewählt ist aus der Gruppe bestehend aus Polyethylenglykol (PEG), Polypropylenglykol (PPG), Polytetrahydrofuran, wobei PEG und PPG besonders bevorzugt sind. Blockcopolymere aus PEG und PPG sind ebenfalls denkbar sowie Polyether, die Kohlenwasserstoffsegmente tragen.

Mit den genannten Substanzen wird überraschenderweise eine besonders gute Wiederablösbarkeit erzielt. Ohne an eine bestimmte Theorie gebunden sein zu wollen, ist es denkbar, dass durch die genannten Substanzen, insbesondere und beispielsweise PEG, der lonenfluss des oder der Elektrolyten durch die Masseschicht beschleunigt wird.

Die Gesamtmenge an Kompatibilisatoren in der Klebemasse beträgt gemäß bevorzugter Ausführungsformen in denen wenigstens ein Kompatibilisator enthalten ist, 1 bis 10 Gew.-%, bevorzugt 1 bis 5 Gew.-%, bezogen auf 100 Gew.-% der Basismasse.

Hierdurch ist die Klebemasse hinsichtlich des Zielkonfliktes aus der Verklebungsfestigkeit und der elektrischen Wiederablösbarkeit weiter optimiert.

Gemäß einer besonders bevorzugten Ausführungsform der Erfindung enthält die erfindungsgemäße Haftklebemasse die oben beschriebene Basismasse inkl. sämtlicher Ausgestaltungen bzw. Bevorzugungsstufen, bevorzugt in einer Menge von 88 bis 94 Gew.-% bezogen auf das Gesamtgewicht der Klebemasse, und
die ionische Flüssigkeit 1-Ethyl-3-methylimidazolium-tetrafluorborat als Elektrolyt, bevorzugt in einer Menge von 4 bis 10 Gew.-% bezogen auf das Gesamtgewicht der Klebemasse, und PEG als Kompatibilisator, bevorzugt in einer Menge von 2 bis 8 Gew.-% bezogen auf das Gesamtgewicht der Klebemasse.

Bevorzugt ist dabei das wenigstens eine Polyvinylaromat-Polydien-Blockcopolymer wenigstens ein Styrol-Butadien-Styrol-Blockcopolymer, wobei besonders bevorzugt zwei verschiedene Styrol-Butadien-Styrol-Blockcopolymere enthalten sind.

Bevorzugt ist dabei zudem als Klebharz ein hydriertes Pentaerithryt-Kolophonium-Harz enthalten, bevorzugt in einem Mengenanteil bezogen auf die Gesamtmenge an enthaltenen Klebharzen von 55 bis 100 Gew.-%.

Mit einer derartigen Klebemasse ergibt sich eine besonders gute Wiederablösbarkeit bei gleichzeitig guter Verklebungsfestigkeit vor dem Wiederablösen.

Die erfindungsgemäße Klebemasse ist eine Haftklebemasse.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert:
G' = (τ/γ) • cos(δ) (τ = Schubspannung, γ = Deformation, δ = Phasenwinkel = Phasenverschiebung zwischen Schubspannungs- und Deformationsvektor).

Die Definition des Verlustmoduls G" lautet:
G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Bevorzugt weist die Haftklebemasse im Deformationsfrequenzbereich von 10° bis 10¹ rad/sec bei 23 °C einen Speichermodul G' und einen Verlustmoduls G" im Bereich von 10³ bis 10⁷ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Insbesondere weist die Haftklebemasse eine Glasübergangstemperatur von ≤ 23 °C, bestimmt gemäß DIN 53765, auf.

Im Unterschied zu Haftklebemassen weisen Heißschmelzklebstoffe, z.B. auf der Basis von Polyamiden, Polyurethanen oder modifizierten Polyethylenen, bei Raumtemperatur (23 °C) typischerweise keine Klebrigkeit auf, wiewohl auch in Heißschmelzklebstoffzusammensetzungen.

Ein weiterer Gegenstand der vorliegenden Erfindung ist ein Klebeband umfassend wenigstens eine Klebemasseschicht D wenigstens einer erfindungsgemäßen Klebemasse.

Das erfindungsgemäße Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Die Ausführungen gelten analog für die Trägerschicht(en), die als Bestandteil des Klebebandes gemäß einiger bevorzugter Ausführungsformen eine Schicht in x- und y-Richtung ausbildet bzw. ausbilden.

Es versteht sich, dass die einzelnen Schichten entlang der z-Richtung aufeinander angeordnet sind.

Ein weiterer Gegenstand der vorliegenden Erfindung ist ein verklebter Verbund umfassend wenigstens folgende Schichten:
- Ein erstes Substrat A; und
- Ein zweites Substrat B; und
- Ein erfindungsgemäßes Klebeband, welches zwischen dem Substrat A und dem Substrat B angeordnet ist und die Substrate A und B miteinander verklebt.

Ein weiterer Gegenstand der vorliegenden Erfindung ist ein Verfahren zum elektrischen Lösen des erfindungsgemäßen Verbundes, umfassend wenigstens folgende Verfahrensschritte:
i.) Anlegen einer Spannung an zwei verschiedenen Stellen des Verbundes, wobei die Spannung bevorzugt von 2 bis 50 V beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Gemäß bevorzugter Ausführungsformen der Erfindung beträgt die Spannung von 3 bis 12 V. Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc.

Gemäß weiterer bevorzugter Ausführungsformen der Erfindung beträgt die Spannung von 12 bis 50 V. Durch diese vergleichsweise hohe Spannung kann das Wiederablösen besonders schnell erfolgen; die Spannung muss dabei nur für wenige Sekunden angelegt werden.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, betragen.

Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich die Substrate A und B auf schnelle und einfache Weise voneinander lösen, ohne dass ein allzu großer Kraftaufwand erforderlich ist.

Sofern sich die Schichten nach Anlegen der Spannung nicht ohne weitere Einwirkung voneinander lösen, umfasst das erfindungsgemäße Verfahren wenigstens den weiteren Verfahrensschritt:
ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als die Klebkraft vor dem Anlegen der Spannung gemäß Schritt i.)

Das Anlegen der Spannung gemäß Schritt i.) erfolgt an zwei verschiedenen Stellen des erfindungsgemäßen verklebten Verbundes. An welche Stellen die Spannung zweckmäßig angelegt wird, hängt vom Aufbau des Klebebandes und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen ist das Klebeband ein Transferklebeband und besteht aus der Klebemasseschicht D.

Ein solches Klebeband kann in einem verklebten Verbund mit zwei Substraten A und B vorteilhafterweise dadurch elektrisch wieder gelöst werden, dass beide Substrate A und B elektrisch leitfähig sind. Hierzu wird dann eine Spannung an die Substrate A und B angelegt, sodass es in der Klebemasse zu einer Wanderung von Anionen zur Anode und von Kationen zur Kathode kommt. Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A und das Substrat B stark herabgesetzt und es erfolgt ein Lösen dieser Schichten voneinander.

Gemäß bevorzugter Ausführungsformen der vorliegenden Erfindung umfasst der verklebte Verbund somit folgende Schichten:
- Ein erstes Substrat A, welches elektrisch leitfähig ist; und
- Ein zweites Substrat B, welches elektrisch leitfähig ist; und
- Ein erfindungsgemäßes Klebeband, welches aus der Klebemasseschicht D besteht und zwischen dem Substrat A und dem Substrat B angeordnet ist und die Substrate A und B miteinander verklebt.

Gemäß weiterer bevorzugter Ausführungsformen umfasst das Klebeband zusätzlich zur ersten Klebemasseschicht D wenigstens die folgenden Schichten:
- Eine zweite Klebemasseschicht C; und
- wenigstens eine elektrisch leitfähige Trägerschicht T, die zwischen den Schichten D und C angeordnet ist.

Ein derartiges Klebeband kann als doppelseitiges Klebeband über die zweite Klebemasseschicht C an eine Vielzahl unterschiedlicher Substrate angepasst werden. Hierbei kann es sich prinzipiell um die gleichen Substrate handeln wie gemäß der vorherigen Ausführungsformen, in denen das Klebeband ein Transferklebeband ist.

Ein derartiges Klebeband kann zudem aber insbesondere und vorteilhafterweise auch verwendet werden, um später Substrate A und B voneinander zu lösen, von denen nur eines elektrisch leitfähig ist, zum Beispiel das Substrat A.

Gemäß bevorzugter Ausführungsformen sind entweder xi.) nur die Trägerschicht T oder xii.) die Trägerschicht T und die zweite Klebemasseschicht C elektrisch leitfähig ausgestaltet.

Hierdurch kann eine Spannung an xi.) die elektrisch leitfähige Trägerschicht oder xii.) an die zweite Klebemasseschicht C sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander.

Gemäß bevorzugter Ausführungsformen der Erfindung ist xi.) nur die Trägerschicht elektrisch leitfähig. Hieran kann besonders gut eine Spannung angelegt werden, insbesondere und bevorzugt, wenn die Trägerschicht wenigstens eine der Klebemasseschichten seitlich überragt.

Gemäß weiterer bevorzugter Ausführungsformen der Erfindung sind xii.) die Trägerschicht und die zweite Klebemasseschicht C elektrisch leitfähig. Ein derartiger Aufbau hat den Vorteil, dass die Spannung an die Klebemasseschicht C angelegt werden kann. Ein seitlicher Überstand der Trägerschicht ist nicht notwendig. Das Klebeband lässt sich daher auf einfache Weise herstellen, insbesondere da die Schichten D, T und C gemeinsam gestanzt werden können.

Bevorzugt besteht das Klebeband gemäß der vorstehend beschriebenen Ausführungsformen aus den drei Schichten D, T und C. Hierfür wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:
- Ein erstes Substrat A, welches elektrisch leitfähig ist; und
- Ein zweites Substrat B; und
- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Gemäß weiterer bevorzugter Ausführungsformen umfasst das Klebeband zusätzlich zur ersten Klebemasseschicht D wenigstens die folgenden Schichten:
- Eine zweite Klebemasseschicht C; und
- wenigstens eine erste elektrisch leitfähige Trägerschicht T, die zwischen den Schichten D und C angeordnet ist; und
- wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
- Eine dritte Klebemasseschicht C', die auf der der ersten Klebemasseschicht D gegenüberliegenden Fläche der zweiten elektrisch leitfähigen Trägerschicht T' angeordnet ist.

Ein derartiges Klebeband hat wenigstens den Schichtaufbau C-T-D-T`-C` und kann als doppelseitiges Klebeband über die Klebemasseschichten C und C' an eine Vielzahl unterschiedlicher Substrate angepasst werden.

Hierbei kann es sich prinzipiell um die gleichen Substrate handeln wie gemäß der vorherigen Ausführungsformen, in denen das Klebeband ein Transferklebeband ist oder den Dreischichtaufbau D-T-C hat.

Ein derartiges Klebeband kann insbesondere und vorteilhafterweise aber auch verwendet werden, um später Substrate A und B voneinander zu lösen, von denen keines elektrisch leitfähig ist.

Gemäß bevorzugter Ausführungsformen sind entweder xi.) nur die Trägerschichten T und T' oder xii.) die Trägerschichten T und T' und die zweite Klebemasseschicht C und/oder die dritte Klebemasseschicht C' elektrisch leitfähig ausgestaltet.

Hierdurch kann eine Spannung an xi.) die beiden elektrisch leitfähigen Trägerschichten oder xii.) an wenigstens eine der Klebemasseschichten C und C' und an eine der Trägerschichten oder die andere Klebemasseschicht angelegt werden.

Analog zu obigen Ausführungsformen wird angenommen, dass durch das Anlegen der Spannung eine Wanderung des Elektrolyten, insbesondere eine Trennung der Anionen und Kationen einer ionischen Flüssigkeit, in der Klebemasseschicht D erfolgt. Hierdurch wird die Adhäsion der Klebemasseschicht D an die elektrisch leitfähigen Trägerschichten T und T' stark herabgesetzt und es erfolgt ein Lösen dieser Schichten voneinander.

Gemäß bevorzugter Ausführungsformen der Erfindung sind xi.) nur die Trägerschichten T und T' elektrisch leitfähig. Hieran kann besonders gut eine Spannung angelegt werden, insbesondere und bevorzugt, wenn die Trägerschichten T und T' wenigstens eine der jeweils benachbarten Klebemasseschichten seitlich überragen.

Gemäß weiterer bevorzugter Ausführungsformen der Erfindung sind xii.) die Trägerschichten T und T' und die zweite und die dritte Klebemasseschicht C bzw. C' elektrisch leitfähig. Ein derartiger Aufbau hat den Vorteil, dass die Spannung an die Klebemasseschichten C und C' angelegt werden kann. Ein seitlicher Überstand der Trägerschichten T und T' ist nicht notwendig. Das Klebeband lässt sich daher auf einfache Weise herstellen, insbesondere da die Schichten C, T, D, T' und C' gemeinsam gestanzt werden können.

Bevorzugt besteht das Klebeband gemäß der vorstehend beschriebenen Ausführungsformen aus den fünf Schichten C, T, D, T' und C'. Hierfür wird im Rahmen der vorliegenden Anmeldung auch der Begriff Fünfschichtverbund C-T-D-T`-C` verwendet.

Gemäß bevorzugter Ausführungsformen der vorliegenden Erfindung umfasst der verklebte Verbund somit folgende Schichten:
- Ein erstes Substrat A; und
- Ein zweites Substrat B; und
- Ein erfindungsgemäßes Klebeband, welches aus dem Fünfschichtverbund C-T-D-T'-C' besteht und die Substrate A und B miteinander verklebt.

Das elektrisch leitfähige Substrat sämtlicher Ausführungsformen kann beispielsweise ein Gehäuse aus Metall von einem Mobiltelefon sein.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Ein weiterer Gegenstand der vorliegenden Erfindung ist die Verwendung der erfindungsgemäßen Klebemasse zur Verklebung von Bauteilen in elektronischen Geräten, Automobilen, medizinischen Geräten und zahnmedizinischen Geräten.

Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein.

Bevorzugt umfasst die elektrisch leitfähige Trägerschicht wenigstens ein Metall.

Gemäß bevorzugter Ausführungsformen der Erfindung ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Zink, Kupfer und Nickel. Sehr bevorzugt ist Aluminium.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 µm (Mikrometer) auf.

Die elektrisch leitfähige Trägerschicht weist gemäß bevorzugter Ausführungsformen der Erfindung a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall und/oder e) eine mit Metall bedampfte Folie auf.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien, sind dem Fachmann bekannt. Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 µm, besonders bevorzugt von 10 bis 30 µm auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die elektrisch leitfähige Trägerschicht durch Aufdampfen von Metall auf die Klebemasseschicht D oder die Klebemasseschicht C oder die Klebemasseschicht C' bereitgestellt werden.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall bedampften Folie wird insbesondere eine nicht leitfähige Folie mit Metall bedampft, um diese elektrisch leitfähig auszubilden. Das Material der Folie kann prinzipiell ausgewählt sein aus sämtlichen Materialien, die dazu geeignet sind mit Metall bedampft zu werden und als Trägerfolie in Klebebändern verwendet zu werden. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP. Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist.

In den Ausführungsformen, in denen wenigstens eine elektrisch leitfähige Trägerschicht T oder wenigstens zwei elektrisch leitfähige Trägerschichten T und T' vorhanden sind, ist es bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Im Fall des Fünfschichtverbundes sind die seitlichen Überstände der elektrisch leitfähigen Trägerschichten T und T' gemäß vorteilhafter Ausführungsformen räumlich getrennt voneinander angeordnet. Dies erleichtert es eine Spannung an diese beiden Überstände anzulegen.

Im Fall von aufgedampftem Metall als Trägerschicht ist es bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Gemäß bevorzugter Ausführungsformen der Erfindung weist die elektrisch leitfähige Trägerschicht T bzw. T und/oder T' a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder d) wenigstens ein Gitter aus Metall und/oder e) eine mit Metall bedampfte Folie auf, und überragt die erste Klebemasseschicht D und die zweite Klebemasseschicht C oder die erste Klebemasseschicht D und die zweite Klebemasseschicht C und/oder die erste Klebemasseschicht D und die dritte Klebemasseschicht C' in wenigstens einer Erstreckungsrichtung.

Hierdurch kann auf einfache und sichere Weise eine Spannung an die Trägerschicht angelegt werden. Gleichzeitig kann das Klebeband auf vergleichsweise einfache Weise hergestellt werden.

Gemäß bevorzugter Ausführungsformen der Erfindung weist die elektrisch leitfähige Trägerschicht T bzw. T und/oder T' eine oder mehrere Lagen, bevorzugt eine Lage, wenigstens eines aufgedampften Metalls, bevorzugt ausgewählt aus der Gruppe bestehend aus Kupfer und Aluminium, auf.

Gemäß besonders bevorzugter Ausführungsformen der Erfindung weist die elektrisch leitfähige Trägerschicht T bzw. T und/oder T' e) eine mit Metall bedampfte Folie auf, und überragt die erste Klebemasseschicht D in wenigstens einer Erstreckungsrichtung. Hierbei ist die Folie insbesondere auf einer Oberfläche mit Metall bedampft und die jeweilige Trägerschicht über die metallisierte Fläche an die erste Klebemasseschicht D, und damit an die elektrisch ablösbare Schicht, gebunden.

Hierdurch kann auf einfache und sichere Weise eine Spannung an die Trägerschicht angelegt werden.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Gemäß einiger oben beschriebener Ausführungsformen des Dreischichtverbundes D-T-C ist die Klebemasseschicht C elektrisch leitfähig.

Gleichermaßen kann auch die Klebemasseschicht C und/oder die Klebemasseschicht C' des Fünfschichtverbundes C-T-D-T'-C' elektrisch leitfähig ausgestaltet sein.

Im Folgenden werden diese Schichten weiter ausgeführt. Der Einfachheit halber wird an geeigneten Stellen der Begriff "elektrisch leitfähige Klebemasseschicht" verwendet. Dieser bezieht sich je nach den obigen Ausführungsformen auf die Klebemasseschicht C oder die Klebemasseschichten C und/oder C'. Ferner wird der Einfachheit halber der Ausdruck "die Klebemasseschichten C bzw. C und/oder C‴ verwendet, womit die jeweiligen Schichten in den beschriebenen Ausführungsformen des Klebebandes umfassend wenigstens den Dreischichtverbund oder wenigstens den Fünfschichtverbund gemeint sind.

Die Klebemasseschichten C und C' sind unabhängig voneinander und können gleich oder verschieden voneinander sein.

Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Bevorzugt enthält die elektrisch leitfähige Klebemasseschicht 5 bis 40 Gew.-%, besonders bevorzugt 20 bis 40 Gew.-%, ganz besonders bevorzugt 25 bis 35 Gew.-%, an elektrisch leitfähigen Partikeln, insbesondere Metallpartikeln und/oder metallisierten Partikeln, bezogen auf 100 Gew.-%, bezogen auf 100 Gew.-% an enthaltenen Polymeren und Klebharzen.

Die elektrisch leitfähigen Partikel sollten bevorzugt nicht oder nicht deutlich größer sein als die jeweilige Dicke der elektrisch leitfähigen Klebemasseschicht in z-Richtung, gemessen mit dem Lichtmikroskop.

Bevorzugt weisen die elektrisch leitfähigen Partikel eine durchschnittliche Partikelgröße von 1 bis 10 µm, besonders bevorzugt von 1 bis 6 µm, wiederum bevorzugt von 3 bis 5 µm, wie insbesondere 4 µm, auf.

Die elektrisch leitfähige Klebemasseschicht ist insbesondere wenigstens in z-Richtung elektrisch leitfähig.

Sie kann aber auch in der xy-Ebene elektrisch leitfähig sein. Wenn die elektrisch leitfähige Klebemasseschicht lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Klebkraft, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Unabhängig davon, ob die Klebemasseschichten C bzw. C und/oder C' elektrisch leitfähig ausgestaltet sind gelten folgende Ausführungen.

Die Klebemasse der Klebemasseschichten C bzw. C und/oder C' ist gemäß bevorzugter Ausführungsformen keine Haftklebemasse.

Gemäß besonders bevorzugter Ausführungsformen der Erfindung ist die Klebemasse der Klebemasseschichten C bzw. C und C' eine Haftklebemasse und die Klebemasseschicht C bzw. C und C' damit eine Haftklebemasseschicht.

Die Klebemasseschichten C bzw. C und/oder C' sind gemäß bevorzugter Ausführungsformen der Erfindung wie die Klebemasseschicht D Klebemassen auf Basis zumindest eines Polydien-Blockcopolymers und wenigstens eines Klebharzes.

Gemäß bevorzugter Ausführungsformen der Erfindung wird in den Klebemasseschichten C bzw. C und/oder C' das gleiche Polydien-Blockcopolymer und das gleiche Klebharz verwendet, wie in der Klebemasseschicht D.

Hierdurch können insbesondere ähnliche Substrate, hier als A und B bezeichnet, miteinander verklebt sein.

Gemäß weiterer bevorzugter Ausführungsformen der Erfindung wird in den Klebemasseschichten C bzw. C und/oder C' eine von der Klebemasse der Klebemasseschicht D verschiedene Klebemasse verwendet.

Hierdurch können die Eigenschaften der leitfähigen Schicht besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Gemäß bevorzugter Ausführungsformen der Erfindung wird in den Klebemasseschichten C bzw. C und/oder C' eine von der Klebemasse der Klebemasseschicht D verschiedene Klebemasse verwendet, wobei die Klebemasse der Klebemasseschichten C bzw. C und/oder C' hitzeaktivierbar sein kann oder eine Haftklebemasse auf Acrylat-Basis sein kann.

Die Klebemasse der Klebemasseschicht D und je nach Ausführungsform weitere Klebemassen werden mittels bekannter Verfahren hergestellt und in Schichtform gebracht, insbesondere durch Ausstreichen. Dies kann unter Verwendung eines oder mehrerer geeigneter Lösemittel erfolgen oder auch lösemittelfrei.

Ferner können ggf. einer oder mehrere Trocknungsschritte erfolgen. Die Herstellung erfindungsgemäßer Klebemassen findet jedoch bevorzugt lösemittelfrei durch Extrusion statt, was ein weiterer Vorteil der vorliegenden Erfindung ist. Auf diese Weise lässt sich bereits bei der Herstellung erfindungsgemäßer Klebemassen und Klebemasseschichten der Grad an Nachhaltigkeit zusätzlich zu der späteren Möglichkeit des Wiederablösens durch Vermeidung von Lösungsmitteleinsatz weiter steigern.

Das Laminieren mehrerer Schichten aufeinander erfolgt auf dem Fachmann bekannte Weise, wobei die Schichten so aufeinandergelegt werden, dass insbesondere ein Schichtverbund DTC, wobei T zwischen D und C angeordnet ist, oder C'-T'-D-T-C als doppelseitiges Klebeband erhalten wird.

Das Bereitstellen der Trägerschichten T bzw. T' kann wie oben bereits ausgeführt auf verschiedene Weise erfolgen.

So ist es denkbar, dass a) eine Metallfolie, insbesondere eine Aluminiumfolie, und/oder b) ein elektrisch leitfähiges Netz und/oder d) wenigstens ein Gitter aus Metall und/oder e) eine mit Metall bedampfte PET-Folie zwischen den jeweiligen Klebemasseschichten platziert wird.

Ferner können c) Metallpartikel direkt auf die Oberfläche der Klebemasseschicht D oder C oder C' aufgedampft werden.

Das erfindungsgemäße Klebeband stellt insbesondere ein doppelseitiges Klebeband dar, bei dem je nach Ausführungsform zwei Flächen der Klebemasseschicht D (Transferklebeband) oder eine Fläche der ersten Klebemasseschicht D und eine Fläche der zweiten Klebemasseschicht C (Dreischichtverbund D-T-C) oder jeweils eine Fläche der Klebemasseschichten C und C' (Fünfschichtverbund C-T-D-T`-C`) jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 15 bis 2000 µm, besonders bevorzugt von 20 bis 500 µm, ganz besonders bevorzugt von 25 bis 200 µm. Jedoch ist eine so geringe Dicke wie möglich bevorzugt, so z. B. von unterhalb 100 µm.

In den Ausführungsformen des Dreischichtverbundes D-T-C sowie des Fünfschichtverbundes C-T-D-T`-C` weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Um, falls gewünscht, die Verankerung der Klebemasseschicht oder der Klebemasseschichten auf einer Trägerschicht zu erhöhen, kann die Trägerschicht chemisch und/oder physikalisch, insbesondere physikalisch vorbehandelt sein. Corona-, Plasma- oder Flammvorbehandlung sind denkbar. Die Oberflächenbehandlung mittels Corona auch für metallisierte Folien ist dem Fachmann bekannt und beispielsweise in der EP 0355622 A2 beschrieben.

Nachfolgend werden bevorzugte Ausführungsformen der Erfindung unter Bezugnahme auf die beiliegenden Figuren näher erläutert und beschrieben. Dabei zeigen:
Fig. 1 eine vereinfachte schematische Querschnittsdarstellung durch ein erfindungsgemäßes doppelseitiges Klebeband in einer bevorzugten Ausführungsform; und
Fig. 2 eine vereinfachte schematische Querschnittsdarstellung durch ein erfindungsgemäßes doppelseitiges Klebeband in einer bevorzugten Ausführungsform; und
Fig. 3 eine vereinfachte schematische Querschnittsdarstellung durch ein erfindungsgemäßes doppelseitiges Klebeband in einer bevorzugten Ausführungsform; und
Fig. 4 eine vereinfachte schematische Querschnittsdarstellung durch einen erfindungsgemäßen verklebten Verbund einer bevorzugten Ausführungsform; und
Fig. 5 eine vereinfachte schematische Querschnittsdarstellung durch einen erfindungsgemäßen verklebten Verbund, an den eine Spannung angelegt ist, in einer bevorzugten Ausführungsform; und
Fig. 6 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und
Fig. 7 eine vereinfachte schematische Querschnittsdarstellung durch einen erfindungsgemäßen verklebten Verbund einer bevorzugten Ausführungsform; und
Fig. 8 eine vereinfachte schematische Querschnittsdarstellung durch einen erfindungsgemäßen verklebten Verbund einer bevorzugten Ausführungsform.

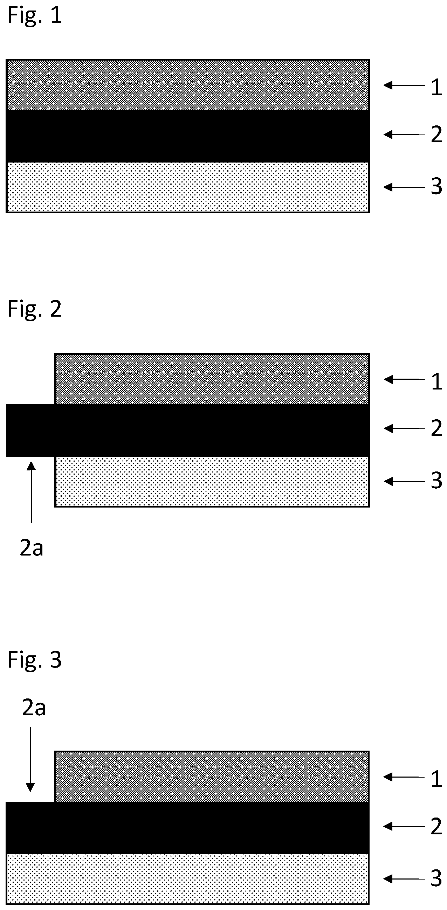

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 und die zweite Klebemasseschicht C 3 in wenigstens einer Erstreckungsrichtung der Schichtebene seitlich, sodass die elektrisch leitfähige Trägerschicht T 2 einen Überstand mit wenigstens einer freien Fläche 2 a aufweist.

In Fig. 3 ist eine weitere bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 a aufweist. In Fig 3 ist die Klebemasseschicht C 3 so ausgebildet, dass sie ebenfalls einen Überstand relativ zur Schicht D 1 aufweist. Bei der Trägerschicht T 2 handelt es sich insbesondere um eine einseitig mit Aluminium beschichtete PET-Folie, wobei die aluminisierte Seite an die Schicht D 1 gebunden ist.

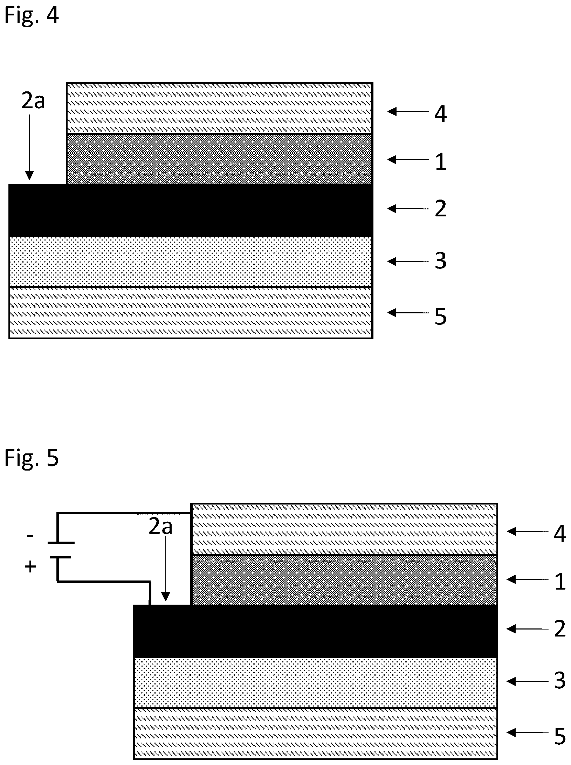

In Fig. 4 ist eine schematische Darstellung des erfindungsgemäßen verklebten Verbundes in einer bevorzugten Ausführungsform abgebildet. Wie anhand von Fig. 4 erkennbar, ist das Klebeband über die Klebemasseschicht D 1 auf einer Fläche des ersten Substrates A 4 angeordnet, wobei das erste Substrat elektrisch leitfähig ist.

Ferner ist das Klebeband über die zweite Klebemasseschicht C 3 auf einer Fläche eines zweiten Substrates B 5 angeordnet.

In Fig. 4 ist ebenfalls beispielhaft dargestellt, dass die elektrisch leitfähige Trägerschicht T 2 die Klebemasseschicht D 1 in wenigstens einer Erstreckungsrichtung der Schichtebene seitlich überragt, sodass die elektrisch leitfähige Trägerschicht T einen Überstand mit einer freien Fläche 2 a aufweist.

Über diese freie Fläche 2a kann nun eine Spannung angelegt werden, wie in der schematischen Darstellung gemäß Fig. 5 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D 1.

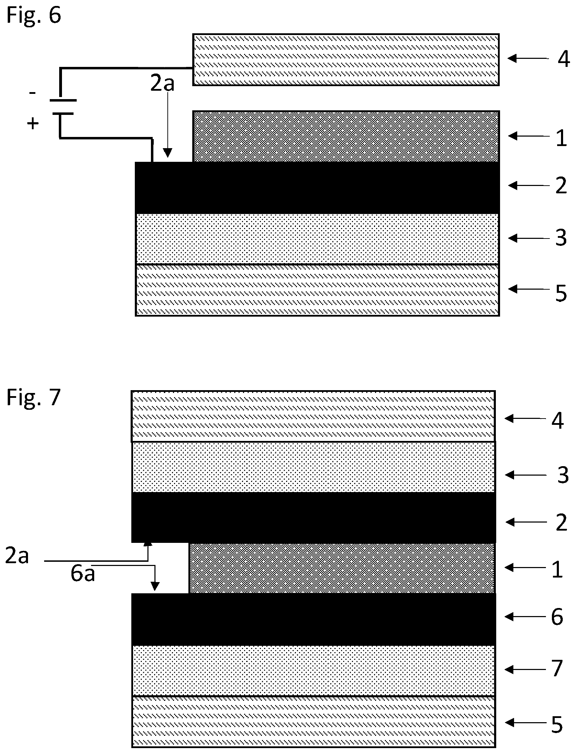

Hierdurch wird die Adhäsion der Klebemasseschicht D 1 an das Substrat A 4 stark herabgesetzt und es erfolgt ein Lösen dieser Schichten voneinander, wie an der schematischen Darstellung gemäß Fig. 6 erkennbar.

In Fig. 7 ist eine weitere schematische Darstellung des erfindungsgemäßen verklebten Verbundes in einer bevorzugten Ausführungsform abgebildet. Wie anhand von Fig. 7 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

In Fig. 7 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2a und die elektrisch leitfähige Trägerschicht T' einen Überstand mit einer freien Fläche 6a aufweist.

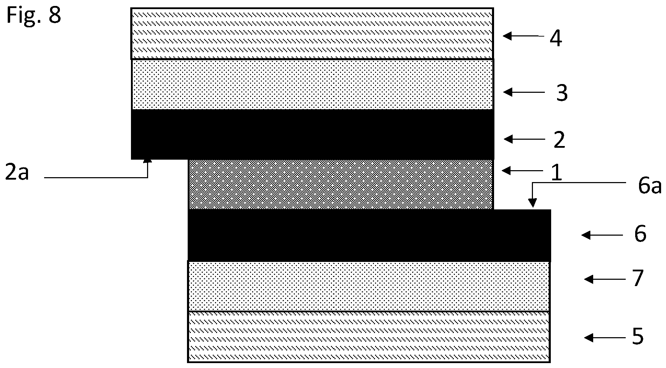

In Fig. 8 ist eine weitere schematische Darstellung des erfindungsgemäßen verklebten Verbundes in einer bevorzugten Ausführungsform abgebildet, welche der Darstellung gemäß

Fig. 7 ähnlich ist. Im Unterschied zu Fig. 7 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2a bzw. 6a räumlich getrennt sind.

Über diese freien Flächen 2a und 6a kann nun eine Spannung angelegt werden, analog zu Figur 5. Im Unterschied zur Ausführungsform gemäß Figur 5 kann die Spannung an die Flächen 2a und 6a angelegt werden, sodass keines der Substrate A und B elektrisch leitfähig sein muss.

Durch das Anlegen der Spannung erfolgt eine Wanderung des Elektrolyten, insbesondere eine Trennung der Anionen und Kationen einer ionischen Flüssigkeit, in der Klebemasseschicht D 1. Hierdurch wird die Adhäsion der Klebemasseschicht D 1 an die Trägerschichten T 2 und/oder T' 6 stark herabgesetzt und es erfolgt ein Lösen dieser Schichten voneinander. Insbesondere erfolgt ein Ablösen an die Schicht, an welche der Minuspol angelegt wird.

Das Anlegen der Spannung ist im Fall der räumlich getrennten Flächen 2a und 6a gemäß Fig. 8 vereinfacht.

Die Darstellungen in den Fig. 1 bis 8 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen.

### Prüfmethoden

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

### Test I - Molmasse (GPC)

### (a) Peakmolmasse von einzelnen Blockcopolymermoden

Polymere sind im Hinblick auf die Molmassenverteilung polymodale Systeme. Mischungen aus verschiedenen Polymeren können als multimodale Systeme, wobei jedes Polymer eine eigene Molmassenverteilung einbringt, aufgefasst werden. Mischungen von Blockcopolymeren mit Strukturen unterschiedlicher Molmassenverteilung können ebenfalls als multimodale Systeme aufgefasst werden. Jedes Blockcopolymer bringt dann eine eigene Molmassenverteilung ein. Der Einfachheit werden diese hier Blockcopolymermode genannt.

GPC (Gelpermeationschomatographie) bietet sich als messtechnisches Verfahren zur Bestimmung der Molmasse einzelner Polymermoden in Gemischen verschiedener Polymere an. Für die im Sinne dieser Erfindung einsetzbaren durch lebende, anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MM) von Elastomeren werden mittels GPC bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. (µ = µm; 1 Å = 10⁻¹⁰ m).

### (b) gewichtsmittlere Molmasse

Das gewichtsmittlere Molekulargewicht Mw von Klebharzen, Weichmachern und Verstärkern wird mittels GPC bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II- DSC

Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg. Auch die Schmelztemperatur bzw. Erweichungstemperatur von Polymeren bzw. Polymerblöcken wird auf diese Weise ermittelt.

### Test III - (Klebharz)Erweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test IV - Schmelzviskosität

Zur Bestimmung der Schmelzviskosität der Weichharze wird ein Schubspannungssweep in einem schubspannungsgeregelten DSR 200 N Rheometer der Firma Rheometrics Scientific in Rotation durchgeführt. Es kommt ein Kegel/Platte-Messsystem mit einem Durchmesser von 25 mm (Kegelwinkel 0,1002 rad) zur Anwendung, der Messkopf ist luftgelagert und geeignet für Normalkraftmessungen. Der Spalt beträgt 0,053 mm und die Messtemperatur 25 °C. Die Frequenz wird von 0,002 Hz bis 200 Hz variiert und die Schmelzviskosität bei 1 Hz registriert.

### Test V - Klebkraft Stahl

Die Bestimmung der Klebkraft wird wie folgt durchgeführt. Als definierter Haftgrund wird eine polierte Stahlplatte (ASTM D3330; dreimal mit Aceton mit einem Zellstofftuch gesäubert und 10 min abgedampft) mit einer Stärke von 2 mm eingesetzt. Das zu untersuchende verklebbare Flächenelement wird, falls nicht anderweitig angegeben, auf eine Breite von 20 mm und eine Länge von etwa 25 cm zugeschnitten, mit einem Handhabungsabschnitt versehen und unmittelbar danach fünfmal hin und her mit einer Stahlrolle von 4 kg bei einem Vorschub von 10 m/min auf den Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus zwei Einzelmessungen.

### Test VI - Dicke

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Das folgende erfindungsgemäße Beispiel für eine erfindungsgemäße Klebemasse sowie Klebebänder umfassend wenigstens eine Klebemasseschicht D einer erfindungsgemäßen Klebemasse wurde in Form eines Transferklebebandes hergestellt, zwischen Substrate verklebt und im Anschluss durch ein Anlegen einer Spannung elektrisch wieder gelöst.

### Erfindungsgemäßes Beispiel 1

Die Klebemasse und das daraus hergestellte Transferklebeband wurden folgendermaßen bereitgestellt:
30 % Kraton D1152 ES (15 % Diblock, Polystyrolgehalt: 29 %, lineares SBS), 13 % Kraton D1116 AT (PS 23 %, Diblock 16 %, radiales SBS),
23 % Dercolyte A115 (Klebharz, EP: 115 °C, alpha-Pinen)
30 % Foral 105 (Klebharz, EP 105 °C, hydriertes Pentaerithryt-Kolophonium, hohe Polarität), 3 % Wingtack 10 (Weichmacherharz, EP 10 °C, fl. C5-Harz), 0,5 % Irganox 1010 (primäres Alterungsschutzmittel), 0,5 % Irgafos 168 (sekundäres Alterungsschutzmittel) wurden mit Lösungsmittel (z. B. Aceton, Siedegrenzenbenzin 60/95, Toluol) versetzt und miteinander vermischt bis eine homogene Lösung erhalten wurde. Die Angaben in % stellen Gewichtsprozent bezogen auf das Gesamtgewicht der Basismasse bestehend aus den genannten Bestandteilen ohne Lösungsmittel dar. Die Gesamtkonzentration der Haftklebemasse im Lösungsmittel beträgt 35 Gew.-%.

Anschließend wurden 7 Gew.-% 1-Ethyl-3-methylimidazolium-tetrafluorborat und 3,5 Gew.-% Polyethylenglycol 400 zugegeben, wobei diese Mengen auf 100 Gew.-% der zuvor hergestellten Basismasse bezogen sind.

Die Lösung wurde mittels eines Kommarakels auf eine Lage eines silikonisierten Polyesterträgers (silikonisierter Liner) beschichtet und anschließend für 15 Minuten bei 120 °C in einem Trockenschrank vom Lösungsmittel befreit. Bis zur weiteren Verwendung wurde die offene Seite der Haftklebemasse mit einer weiteren Lage eines silikonisierten Polyesterträgers (silikonisierter Liner) abgedeckt.

Nach der Trocknung betrug die Schichtdicke der Haftklebemasseschicht 50 µm.

Ein silikonisierter Liner wurde entfernt. Die freigelegte Seite der Haftklebemasse wurde dann auf die aluminisierte Seite einer mit Aluminium bedampften PET-Folie mit einer Gesamtdicke von 23 µm kaschiert, sodass ein seitlicher Überstand von 4 cm gegenüber der Haftklebemasse entstand. Die aluminisierte Seite der Folie wurde unmittelbar vor der Kaschierung coroniert (Dosis von 30 W*min/m²).

Die Probe wurde für 24 Stunden bei 23 °C und 50 % relativer Luftfeuchtigkeit gelagert.

Anschließend wurde die Klebkraft gemäß der oben angegebenen Methode bestimmt. Sie betrug 7,1 N/cm.

Es wurde ebenfalls eine entsprechende Vergleichsmasse V1 ohne die Zugabe von 7 Gew.-% 1-Ethyl-3-methylimidazoliumtetrafluoroborat und 3,5 Gew.-% Polyethylenglycol 400 aber ansonsten auf identische Weise hergestellt und auf ihre Klebkraft nach obiger Methode getestet. Die Klebkraft betrug hierbei 9,3 N/cm.

Zum Test der elektrischen Ablösbarkeit wurden erneut Proben des oben genannten erfindungsgemäßen Beispiels 1, also inklusive der Zugabe von 7 Gew.-% 1-Ethyl-3-methylimidazoliumtetrafluoroborat und 3,5 Gew.-% Polyethylenglycol 400, nach oben beschriebener Vorschrift hergestellt und auf die elektrische Wiederablösbarkeit geprüft.

Auch hier wurde die freigelegte Seite der Haftklebemasse auf die aluminisierte Seite einer mit Aluminium bedampften PET-Folie mit einer Gesamtdicke von 23 µm kaschiert, sodass ein seitlicher Überstand von 4 cm gegenüber der Haftklebemasse entstand.

Anschließend wurde eine Spannung angelegt, wobei eine erste Krokodilklemme (Klemmbacken außen mit Gummi isoliert) mit dem Pluspol an den Überstand und eine zweite mit dem Minuspol an die Stahlplatte angelegt wurden.

Die Spannung betrug dabei 12 V und wurde für 1 min angelegt.

Nach Ablauf von 1 Minute wurde die Spannung entfernt und unmittelbar danach die Klebkraft gemäß der oben angegebenen Methode bestimmt.

Die Klebkraft betrug nur noch 4,9 N/cm.

Die Stahlplatte war rückstandslos im Hinblick auf Klebemassereste.

Somit ist es überraschenderweise gelungen eine Klebemasseschicht auf Basis eines Polydien-Blockcopolymers elektrisch ablösbar und rückstandsfrei herzustellen.

Wie die Versuche zur Klebkraft und Wiederablösbarkeit bei dem erfindungsgemäßen Beispiel 1 zeigen, ist die Klebkraft der Klebemasseschicht D an Substrate, wie Stahl, vor dem Anlegen der Spannung groß und wird erst durch das Anlegen der Spannung auf einen so geringen Wert reduziert, sodass sich die Substrate einfacher voneinander lösen lassen.

### Bezugszeichenliste

- 1: Klebemasseschicht D
- 2: elektrisch leitfähige Trägerschicht T
- 2a: freie Fläche der elektrisch leitfähigen Trägerschicht T
- 3: zweite Klebemasseschicht C
- 4: erstes Substrat A
- 5: zweites Substrat B
- 6: zweite elektrisch leitfähige Trägerschicht T'
- 6a: freie Fläche der elektrisch leitfähigen Trägerschicht T'
- 7: dritte Klebemasseschicht C'

## Patentansprüche

1. Haftklebemasse enthaltend wenigstens ein Elektrolyt und eine Basismasse, wobei die Basismasse wenigstens ein Polydien-Blockcopolymer und wenigstens ein Klebharz enthält.

2. Haftklebemasse nach Anspruch 1, **dadurch gekennzeichnet, dass** der Elektrolyt ausgewählt ist aus der Gruppe bestehend aus ionischen Flüssigkeiten und Metallsalzen, wobei ionische Flüssigkeiten besonders bevorzugt sind.

3. Haftklebemasse nach Anspruch 2, **dadurch gekennzeichnet, dass** das Anion der ionischen Flüssigkeit ausgewählt ist aus der Gruppe bestehend aus Br-, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, AsF₆⁻, SbF₆⁻, CF₃(CF₂)₃SO₃⁻, (CF₃CF₂SO₂)₂N⁻, CF₃CF₂CF₂COO⁻, (FSO₂)₂N⁻, und dabei besonders bevorzugt ausgewählt ist aus (CF₃SO₂)₂N⁻ und (FSO₂)₂N⁻, und/oder das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis und Kationen auf Ammonium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium und 1-Butyl-3-methylimidazolium, wobei das Kation ganz besonders bevorzugt 1-Ethyl-3-methylimidazolium, ist.

4. Haftklebemasse nach einem der vorherigen Ansprüche, **dadurch gekennzeichnet, dass** der Elektrolyt 1-Ethyl-3-methylimidazolium-tetrafluorborat ist.

5. Haftklebemasse nach einem der vorhergehenden Ansprüche, **dadurch gekennzeichnet, dass** sie 2 bis 10 Gew.-%, bevorzugt 4 bis 9 Gew.-%, an Elektrolyten, bevorzugt ionischen Flüssigkeiten, bezogen auf 100 Gew.-% der Basismasse enthält.

6. Haftklebemasse nach einem der vorhergehenden Ansprüche, **dadurch gekennzeichnet, dass** das wenigstens eine Polydien-Blockcopolymer ein Polyvinylaromat-Polydien-Blockcopolymer, bevorzugt ein Polystyrol-Polydien-Blockcopolymer, ist.

7. Haftklebemasse nach einem der vorhergehenden Ansprüche, **dadurch gekennzeichnet, dass** sie wenigstens einen Kompatibilisator enthält, der ausgewählt ist aus der Gruppe bestehend aus Polyethern, Polyaminen, Polyvinylpyrrolidonen oder aliphatischen Polyestern, wobei der Kompatibilisator bevorzugt ein Gewichtsmittel der Molekulargewichtsverteilung M_{w} von 100 bis 5000 g/mol, besonders bevorzugt von 200 bis 2000 g/mol, aufweist.

8. Haftklebemasse nach einem der vorhergehenden Ansprüche, **dadurch gekennzeichnet, dass** das Klebharz ausgewählt ist aus der Gruppe bestehend aus Kolophoniumharzen und Terpenphenol-Harzen, wobei ein hydriertes Harz auf Basis eines mit Kolophonium veresterten Pentaerithryts besonders bevorzugt ist.

9. Klebeband umfassend wenigstens eine Klebemasseschicht D einer Klebemasse nach einem der Ansprüche 1 bis 8,

10. Klebeband nach Anspruch 9, **dadurch gekennzeichnet, dass** das Klebeband ein Transferklebband ist und aus der Klebemasseschicht D besteht.

11. Klebeband nach Anspruch 9, **dadurch gekennzeichnet, dass** es zusätzlich wenigstens die folgenden Schichten umfasst:
• Eine zweite Klebemasseschicht C; und
• wenigstens eine elektrisch leitfähige Trägerschicht T, die zwischen den Schichten D und C angeordnet ist.

12. Klebeband nach Anspruch 9, **dadurch gekennzeichnet, dass** es zusätzlich wenigstens die folgenden Schichten umfasst:
• Eine zweite Klebemasseschicht C; und
• wenigstens eine erste elektrisch leitfähige Trägerschicht T, die zwischen den Schichten D und C angeordnet ist; und
• wenigstens eine zweite elektrisch leitfähige Trägerschicht T', die auf der der ersten elektrisch leitfähigen Trägerschicht T gegenüberliegenden Fläche der Klebemasseschicht D angeordnet ist; und
• Eine dritte Klebemasseschicht C', die auf der der ersten Klebemasseschicht D gegenüberliegenden Fläche der zweiten Trägerschicht T' angeordnet ist.

13. Verklebter Verbund umfassend wenigstens folgende Schichten:
• Ein erstes Substrat A; und
• Ein zweites Substrat B; und
• Ein Klebeband nach einem der Ansprüche 9 bis 12, welches zwischen dem Substrat A und dem Substrat B angeordnet ist und die Substrate A und B miteinander verklebt.

14. Verfahren zum elektrischen Lösen des Verbundes nach Anspruch 13, umfassend wenigstens folgende Verfahrensschritte:
i.) Anlegen einer Spannung an zwei verschiedenen Stellen des Verbundes, wobei die Spannung bevorzugt von 2 bis 50 V beträgt.

15. Verwendung der Klebemasse gemäß einem der Ansprüche 1 bis 8 zur Verklebung von Bauteilen in elektronischen Geräten, Automobilen, medizinischen Geräten und zahnmedizinischen Geräten.
